(19) Europäisches Patentamt
European Patent Office
Office européen des brevets

(11) **EP 0 802 048 B1**

(12) **EUROPÄISCHE PATENTSCHRIFT**

(45) Veröffentlichungstag und Bekanntmachung des Hinweises auf die Patenterteilung:
**01.12.1999 Patentblatt 1999/48**

(51) Int. Cl.$^6$: **B41F 13/12**, B41F 13/008

(21) Anmeldenummer: **97810148.3**

(22) Anmeldetag: **14.03.1997**

(54) **Drehgeber für einen Zylinder einer Druckmaschine**

Rotary encoder for a cylinder of a printing machine

Capteur de rotation pour un cylindre d'une machine à imprimer

(84) Benannte Vertragsstaaten:
**BE CH DE DK ES FI FR GB IT LI NL SE**

(30) Priorität: **15.04.1996 DE 19614818**

(43) Veröffentlichungstag der Anmeldung:
**22.10.1997 Patentblatt 1997/43**

(73) Patentinhaber:
**Maschinenfabrik Wifag**
**CH-3001 Bern (CH)**

(72) Erfinder: **Zahnd, Andreas**
**3052 Zollikofen (CH)**

(56) Entgegenhaltungen:
**EP-A- 0 669 208**       **EP-A- 0 693 374**

**Beschreibung**

Die Erfindung betrifft einen Drehgeber für einen Zylinder einer Druckmaschine nach dem Oberbegriff von Anspruch 1. Sie betrifft ferner ein Verfahren zum Synchronisieren der Drehbewegung des Zylinders beim Zuschwenken dieses Zylinders auf einen Gegenzylinder zu.

Drehgeber dienen als Meßwertaufnehmer für Drehbewegungen, im Druckmaschinenbau in erster Linie für die Drehbewegungen der Druckzylinder. Bekannte Drehgeber wandeln eine Drehbewegung nach dem Prinzip der photoelektrischen Abtastung von DIADUR-Kreisteilungen in elektrische Signale um, die in numerischen und speicherprogrammierbaren Steuerungen oder Regeleinrichtungen verarbeitet werden oder allein zur Positionsanzeige dienen. Neben den Inkrementalsignalen ist zusätzlich ein Referenzmarkensignal zur Reproduktion von Bezugspunkten verfügbar. Bekannte Drehgeber weisen einen Rotor auf, der starr mit der Welle, deren Winkellage bestimmt werden soll, verbunden ist, und einen Stator, der mit demjenigen Maschinenteil fest verbunden ist, dem gegenüber die jeweilige Winkellage der Welle bestimmt werden soll.

Insbesondere bei abschwenkbaren Druckzylindern tritt das Problem auf, daß neben der Eigendrehung eines Zylinders, d.h. der Drehung des Zylinders um seine Längsachse, eine Schwenkbewegung um eine Zylinderschwenkachse stattfindet. Die Schwenkbewegung wird der Eigendrehung des Zylinders überlagert. Wird ein abgeschwenkter Zylinder wieder auf seinen Gegenzylinder in die Druckstellung zu geschwenkt, müssen die Winkellagen der beiden Druckzylinder exakt aufeinander abgestimmt werden, d.h. die Drehbewegungen der beiden Zylinder müssen während des Zuschwenkens synchronisiert werden. Besonders problematisch ist diese Synchronisation beim fliegenden Wechsel von Druckstellen, bei dem Druckzylinder bei voller Produktion gegeneinander geschwenkt und in Druckstellung gebracht werden. Die beiden Zylinder müssen ständig während des Zuschwenkens synchron laufen.

Die Nullstellung, d.h. die Winkellage, die der abgeschwenkte Zylinder in der Druckstellung einnimmt, verändert sich bei herkömmlichen Drehgebern während des Ab- und Zuschwenkens ständig. Aufgrund der nur endlichen Schnelligkeit der Regelungselektronik entstehen hierdurch Synchronisationsprobleme, und infolge davon entsteht ein nicht unerheblicher Papierverlust, bis nämlich die beiden in Druckstellung zu bringenden Zylinder vollkommen synchron laufen.

*Ein Drehgeber an einem schwenkbar gelagerten Zylinder ist aus der* EP-A 0693 374 *bekannt. Zum Verschwenken ist der Zylinder in einer ihrerseits drehbar gelagerten Exzenterbuchse erzentrisch zur Drehachse der Exzenterbuchse drehgelagert. Der Drehgeber wird durch ein Geberrad und einen Geberkopf gebildet. Das Geberrad ist an einem Wellenende des Zylinders starr befestigt und weist an seinem äußeren Umfangsrand radial vorspringende Zähne auf deren Stellung vom Geberkopf festgestellt und daraus die Winkelstellung des Zylinders bestimmt wird. Der Geberkopf ist starr an der Exzenterbuchse angebracht.*

Es ist die Aufgabe der Erfindung, eine Synchronisation der Drehbewegung eines Zylinders einer Druckmaschine, der auf einen Gegenzylinder zu geschwenkt wird, mit der Drehbewegung dieses Gegenzylinders zu vereinfachen. Desweiteren soll ein Drehgeber geschaffen werden, mit dem die Winkellage eines Zylinders einer Druckmaschine in allen Betriebsphasen des Zylinders bestimmt werden kann.

Die Aufgabe wird durch den Gegenstand von Anspruch 1 bzw. von Anspruch 12 gelöst.

Die Synchronisation beim Zuschwenken des Zylinders auf seinen Gegenzylinder zu wird erfindungsgemäß dadurch besonders einfach, daß die Winkellage des zu schwenkenden Zylinders gegenüber einem während des Schwenkens in einer konstanten oder wenigstens nahezu konstanten Winkellage gehaltenen Referenzmittel bestimmt wird. Konstant heißt in diesem Zusammenhang, daß das Referenzmittel zwar die Schwenkbewegung des Zylinders mitmachen kann, aber das Referenzmittel selbst gegenüber einem Gestell der Druckmaschine stets eine konstante oder wenigstens nahezu konstante Winkellage einnimmt und nicht, wie nach dem Stand der Technik, *beispielsweise der* EP-A0693 374 *durch das Schwenken selbst verdreht wird.*

Die Erfindung geht von einem Drehgeber für einen Zylinder einer Druckmaschine aus, der ein Meßmittel aufweist, das an dem Zylinder verdrehsicher gegenüber einer Drehachse des Zylinders angeordnet ist, und ein Referenzmittel, demgegenüber die Winkellage des Meßmittels erfaßt und daraus die Winkellage des Zylinders relativ zum Referenzmittel bestimmt werden. Der Begriff Zylinder steht hierbei stellvertretend auch für Walzen oder sonstige Rotationskörper der Druckmaschine, soweit deren Winkellage bestimmt werden soll.

Nach der Erfindung wird das Referenzmittel gegenüber einem Gestell der Druckmaschine in einer wenigstens im wesentlichen unveränderten, konstanten Winkellage gehalten, und zwar in jeder Betriebsstellung des Zylinders. Dabei ist das Referenzmittel auf dem Zylinder um die Drehachse des Zylinders drehbar gelagert. Die Drehachse des Zylinders fällt mit der Zylinderlängsachse zusammen. Dabei kann der Drehgeber auf der Antriebswelle für den Zylinder oder, bevorzugterweise, auf dem drehmomentenfreien Ende des Zylinders angebracht sein. Soweit ein Antriebsmotor für den Zylinder mit dem Zylinder verfahren, insbesondere verschwenkt wird, kann der erfindungsgemäße Drehgeber auch auf der Motorwelle in Ausbildung eines Motorgebers angeordnet sein.

Indem das Referenzmittel zum einen die Bewegungen des Zylinders, die der Zylinder im Betrieb vollführt, mitmacht, zum anderen aber in einer wenigstens im wesentlichen unveränderten Winkellage, der Nullstellung, gegenüber dem Gestell der Druckmaschine gehalten wird, findet jederzeit eine Abtastung der Winkellage des Meßmittels, und damit des Zylinders, gegenüber einer absoluten Nullstellung, nämlich gegenüber dem Maschinengestell, statt. Durch die Regelungselektronik muß bei Einsatz des erfindungsgemäßen Drehgebers die Überlagerung der Eigendrehung des Zylinders durch die Schwenkbewegung und der damit einhergehenden Winkellagenveränderung nicht mehr kompensiert werden. Die Synchronisation, beispielsweise beim Zuschwenken eines Druckzylinders auf seinen Gegendruckzylinder. wird erheblich beschleunigt.

Bevorzugterweise ist der erfindungsgemäße Drehgeber als integrierter Drehgeber ausgebildet, bei dem das Meßmittel einen Innenring bildet, der verdrehsicher auf dem Zylinder sitzt, und das Referenzmittel hierzu einen diesen Innenring umgebenden Außenring bildet, der auf dem Innenring drehgelagert ist. Als Lagerung ist jede Drehlagerung geeignet; bevorzugt wird ein Gleitdrehlager. Der Innenring bzw. das Meßmittel wird vorzugsweise über eine Kupplung auf dem Zylinderzapfen befestigt, die Axialbewegungen und Fluchtungsabweichungen zwischen dem Meßmittel und dem Zylinder ausgleicht.

Nach einem bevorzugten ersten Ausführungsbeispiel der Erfindung ist an dem Referenzmittel ein Pendelarm befestigt, beispielsweise verschraubt, oder einstückig mit dem Referenzmittel ausgebildet, der das auf dem Zylinder drehgelagerte Referenzmittel aufgrund der Wirkung der Schwerkraft stets in seiner Nullstellung hält.

Nach einer bevorzugten zweiten Ausführung der Erfindung wird das Referenzmittel verdrehfrei oder wenigstens nahezu verdrehfrei zwangsgeführt.

Nahezu verdrehfrei bedeutet im Sinne der Erfindung bei allen Ausführungsbeispielen, daß die Abweichung der Winkellage des Referenzmittels von der gegenüber dem Maschinengestell exakten Nullstellung vernachlässigbar klein ist, d.h. eine eventuelle Abweichung kann gegenüber der mit der Schwenkbewegung des Zylinders einhergehenden Winkellagenveränderung des Meßmittels vernachlässigt werden.

In dieser zweiten Ausführungsform kann das Referenzmittel durch eine mit dem Maschinengestell verbundene Geradführung, die nur eine translatorische Bewegung des Referenzmittels zuläßt, verdrehfrei zwangsgeführt werden. Die verdrehfreie Führung kann vorteilhafterweise auch durch ein mehrgliedriges Drehgelenkgetriebe bewirkt werden.

In einer anderen bevorzugten Alternative der zweiten Ausführungsform steht das Referenzmittel mit einem am Maschinengestell schwenkbar gelagerten Haltearm in Eingriff, durch den eine Eigenrotation des Referenzmittels, d.h. ein Verdrehen der Drehachse des Referenzmittels verhindert wird. Vorzugsweise ist der Haltearm mit einer Ausnehmung versehen, insbesondere mit einem Langloch, in der das eingreifende Referenzmittel rein translatorisch geführt wird. Es findet während dieser translatorischen Führung aufgrund der damit einhergehenden geringfügigen Schwenkbewegung des Haltearms keine Eigenrotation des Referenzmittels statt, eine geringfügige Änderung der Winkellage des Referenzmittels gegenüber dem Maschinengestell läßt sich nicht ganz verhindern, ist aber vernachlässigbar.

Nachfolgend werden bevorzugte Ausführungsbeispiele der Erfindung anhand von Figuren erläutert. Es zeigen:

Figur 1   einen erfindungsgemäßen Drehgeber mit Pendelarm,

Figur 2   einen erfindungsgemäßen Drehgeber mit einer Zwangsführung mittels einem schwenkbaren Haltearms,

Figur 3   eine Stirnansicht des Drehgebers nach Figur 3,

Figur 4   einen erfindungsgemäßen Drehgeber mit einer Zwangsführung mittels Geradführung,

Figur 5   die Ansicht A nach Figur 4, und

Figur 6   einen erfindungsgemäßen Drehgeber mit einer Zwangsführung mittels Drehgelenkgetriebe.

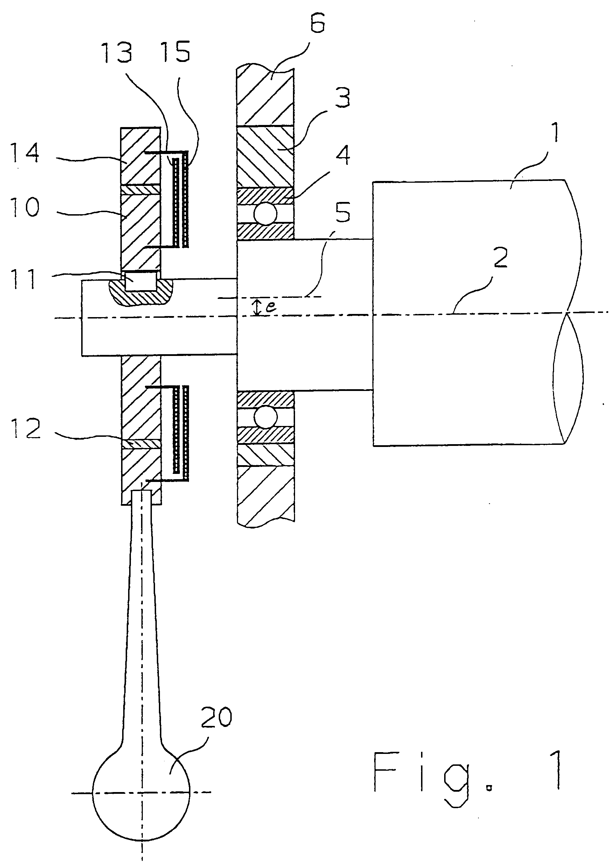

Figur 1 zeigt im Längsschnitt einen Druckzylinder 1, der um seine Längsachse, im folgenden Zylinderdrehachse 2 genannt, drehangetrieben wird und um eine Schwenkachse 5 schwenkbar ist. Der Zylinder 1 ist an seinen beiden äußeren Zylinderzapfen, von denen in Figur 1 nur einer dargestellt ist, in einer Exzenterbuchse 3 mittels eines Kugellagers 4 drehbar gelagert. Die Exzenterbuchse 3 ist in einem Maschinengestell 6 ihrerseits in einem Gleitlager drehbar gelagert. Mittels der Exzenterbuchse 3 wird der Zylinder 1 in an sich bekannter Weise um die Schwenkachse 5 verschwenkt. Die Schwenkachse 5 ist zugleich die Drehachse der Exzenterbuchse 3 in dem Maschinengestell 6. Der Abstand zwischen den beiden Achsen 2 und 5 ist die Exzentizität e.

Am äußersten Zapfenende des Zylinders 1 ist ein Meßmittel verdrehsicher gegenüber der Zylinderdrehachse 2 befestigt. Das Meßmittel wird durch einen Innenring 10 und eine damit starr verbundene, kreisringförmige Meßscheibe 13 gebildet. Die verdrehsichere Anbringung des Innenrings 10 auf dem Zapfen des Zylinders 1 wird durch einen Splint 11 angedeutet. Die Meßscheibe 13 weist eine bekannte Kreisteilung mit einer Vielzahl von in radialer Richtung verlaufenden Strichen auf. Den Innenring 10 umgibt ein darauf gleitdrehgelagerter Außenring 14, mit dem eine weitere kreisringförmige Scheibe 15 starr verbunden ist. Diese zweite Scheibe 15 ist mit einer Vielzahl von Photoelementen zur Abtastung der Strichteilung der Meßscheibe 13 versehen. Mittels der photoelektrischen Abtastung, die lediglich eine bevorzugte Ausführungsform der Abtastung darstellt, auf die die Erfindung jedoch nicht ausschließlich beschränkt ist, werden die relative Winkellage der Meßscheibe 13 gegenüber der zweiten Scheibe 15, die somit als Referenz für die Winkellage der ersten Teilscheibe 13 dient, erfaßt und daraus die Winkellage des Zylinders 1 gegenüber dem als Referenz dienenden Außenring 14 mit der zweiten Scheibe 15, im folgenden Referenzscheibe genannt, bestimmt. Der Außenring 14 und die Referenzscheibe 15 bilden ein Referenzmittel zum Meßmittel.

Die Winkellage der Referenzscheibe 15 im Raum und damit auch gegenüber dem Maschinengestell 6 wird konstant gehalten. Hierzu wird die irdische Schwerkraft genutzt, indem am Außenring 14, ein Gewicht, im Ausführungsbeispiel ein Pendelarm 20, befestigt ist. Diese erwünschte Unwucht ist so groß, daß bei entsprechend guter Drehlagerung 12 des Referenzmittels - im Ausführungsbeispiel des Außenrings 14 auf dem Innenring 10 - ein Einhalten der Nullstellung des Referenzmittels gewährleistet wird.

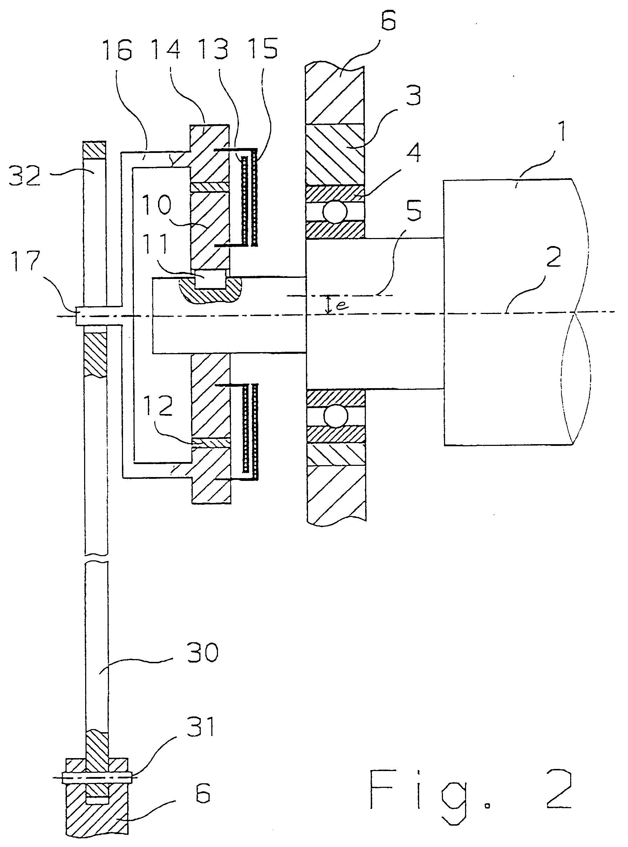

In Figur 2 ist ebenfalls im Längsschnitt das Zapfenende eines Zylinders mit einem Referenzmittel dargestellt, das in seiner Nullstellung gehalten wird. Statt des im Ausführungsbeispiel nach Figur 1 verwendeten Pendelarms wird im Ausfuhrungsbeispiel nach Figur 2 ein Haltearm 30 verwendet. Der Haltearm 30 ersetzt den Pendelarm des vorhergehenden Ausführungsbeispiels. Der Drehgeber selbst entspricht in seiner Konstruktion, soweit die Anordnung des Innenrings 10 und des Außenrings 14 mit den dazugehörigen Scheiben 13 und 15 betroffen ist, dem Ausführungsbeispiel nach Figur 1. Der Zylinder 2 und sein Schwenkmechanismus entsprechen ebenfalls dem Ausführungsbeispiel nach Figur 1.

Der Haltearm 30 ist am Maschinengestell 6 um eine Schwenkachse 31 schwenkbar gelagert. An seinem von der Schwenkachse 31 abgewandten Ende weist der Haltearm 30 eine längliche Ausnehmung 32 auf, die im Ausführungsbeispiel als einfaches Langloch ausgebildet ist. Die Schwenkachse 31 des Haltearms 30 verläuft parallel zur Zylinderdrehachse 2. In der Ausnehmung 32 wird ein starres Führungsmittel 17, das mit dem Referenzmittel starr verbunden ist, bei einer Schwenkbewegung des Zylinders zwangsgeführt. Durch die Zwangsführung wird das Referenzmittel im Druckbetrieb, insbesondere auch beim Schwenken des Zylinders 2, in seiner Nullstellung gehalten.

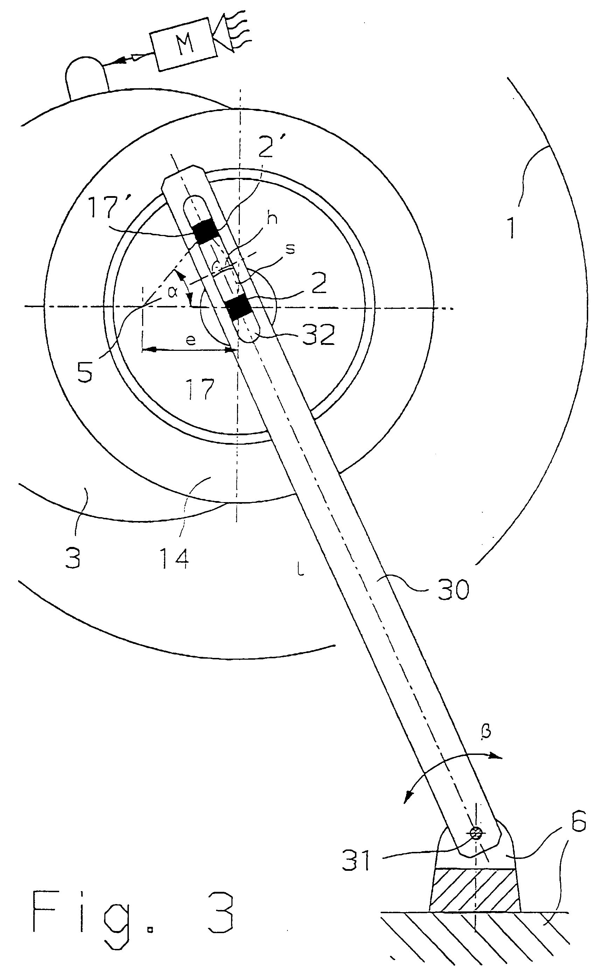

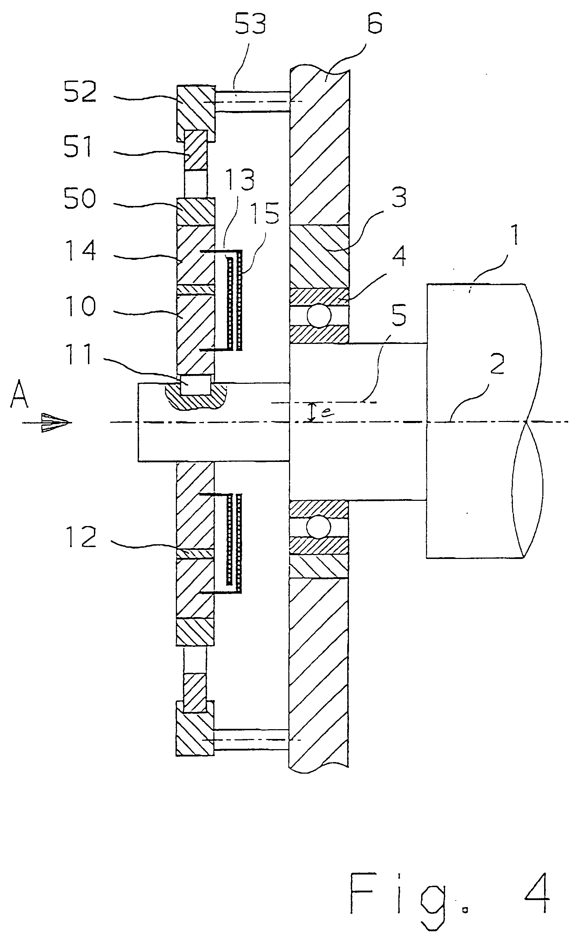

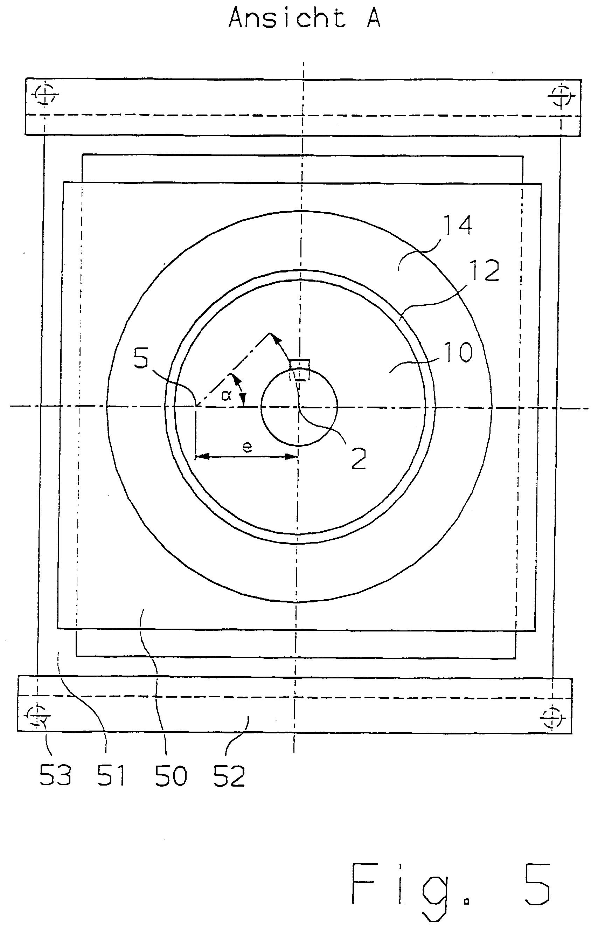

In Figur 3 ist die Anordnung nach Figur 2 in einer Stirnansicht auf den Zylinder 1 dargestellt. Mittels eines Motors M, der an der Exzenterbuchse 3 angreift, wird der Zylinder 1 um die Exzenterachse 5, die gleichzeitig die Schwenkachse des Zylinders 1 darstellt, um einen Winkel $\alpha$ aus seiner Nullstellung, nämlich der Druckstellung, geschwenkt. Bei dieser Schwenkbewegung beschreibt die Zylinderdrehachse 2 einen Kreissegmentbogen s in die mit 2' angedeutete abgeschwenkte Stellung.

Bei einem herkömmlichen Drehgeber würde das Referenzmittel 14, 15 durch das Schwenken ebenfalls um den Winkel $\alpha$ aus seiner Nullstellung gedreht werden. Um dies zu verhindern, ist im Ausführungsbeispiel nach den Figuren 2 und 3 das Referenzmittel 14 starr mit dem Führungsmittel 17 verbunden, das in der Ausnehmung 32 des Haltemittels 30 seitlich eng beabstandet zwangsgeführt wird. Im Ausführungsbeispiel ist das Führungsmittel 17 als einfacher Vierkantbolzen ausgebildet, der in der Ausnehmung 32 gleitend rein translatorisch geführt wird; ein Verkippen wird dadurch verhindert. Im Ausführungsbeispiel nach den Figuren 2 und 3 fällt die Längsachse des Führungsmittels 17 mit der Zylinderdrehachse 2 zusammen; das ist jedoch nicht unumgänglich notwendig. Die Winkellage des Referenzmittels ändert sich beim Schwenken des Zylinders 1 nicht um den Schwenkwinkel a des Zylinders 1, sondern um den sehr viel kleineren Schwenkwinkel $\beta$ des Haltearms 30.

Die Lage der Schwenkachse 31 des Haltearms 30 ist relativ zur Schwenkachse 5 des Zylinders 1 so gewählt, daß die Längsachse des Haltearms 30 die Verlängerung einer geraden Verbindungslinie zwischen den beiden Endstellungen der Zylinderdrehachse 2, die in Figur 3 mit den Bezugszeichen 2 und 2' angedeutet sind, bildet. Mit anderen Worten, das durch die Schwenkachse 5 des Zylinders 1 verlaufende Lot auf die Verbindungslinie zwischen den beiden Stellungen der Zylinderdrehachse 2, d.h. auf die Verbindungslinie zwischen der ebenfalls mit 2 bezeichneten Druckstellung und der mit 2' bezeichneten Abschwenkstellung, bildet die Winkelhalbierende des Schwenkwinkels $\alpha$. Der größte senkrechte Abstand h der Verbindungslinie zwischen den beiden Endstellungen 2 und 2' und dem Kreisbogensegment s, auf dem sich die Zylinderdrehachse 2 beim Schwenken des Zylinders 1 bewegt, liegt auf dieser Winkelhalbierenden. Aufgrund der Abweichung des Kreisbogensegments s von der geraden Verbindungslinie zwischen den Stellungen 2 und 2' erfährt das Referenzmittel beim Schwenken des Zylinders 1 eine geringe Änderung seiner Nullstellung. Diese Änderung, d.h. die Winkelabweichung von der Nullstellung, entspricht dem Schwenkwinkel $\beta$, um den der Haltearm 30 bei der Schwenkbewegung des Zylinders 1 um seine eigene Schwenkachse 31 verschwenkt wird. Diese Änderung der Winkellage von der Nullstellung ist jedoch gegenüber der Winkeländerung $\alpha$, wie sie der Schwenkbewegung des Zylinders 1 entsprechen würde, vernachlässigbar klein.

Die Winkelabweichung $\beta$ läßt sich nach der folgenden Formel berechnen:

$$\sin \beta = e(1-\cos \alpha/2)/1,$$

wobei e die Exzentrizität der Zylinderdrehachse 2 gegenüber der Zylinderschwenkachse 5 und 1 die wirksame Länge des Haltearms 30 ist. Die wirksame Länge 1 entspricht dem Abstand zwischen der Schwenkachse 31 und der in der Ausnehmung 32 zwangsgeführten Zylinderdrehachse 2. Es findet eine zweifache "Untersetzung" des Schwenkwinkels $\alpha$ des Zylinders 1 statt; zum einen wird der Winkel $\alpha$ in den nurmehr wirksamen "Hub" h und dieser zum anderen in Abhängigkeit von der Länge 1 in den Schwenkwinkel $\beta$ untersetzt.

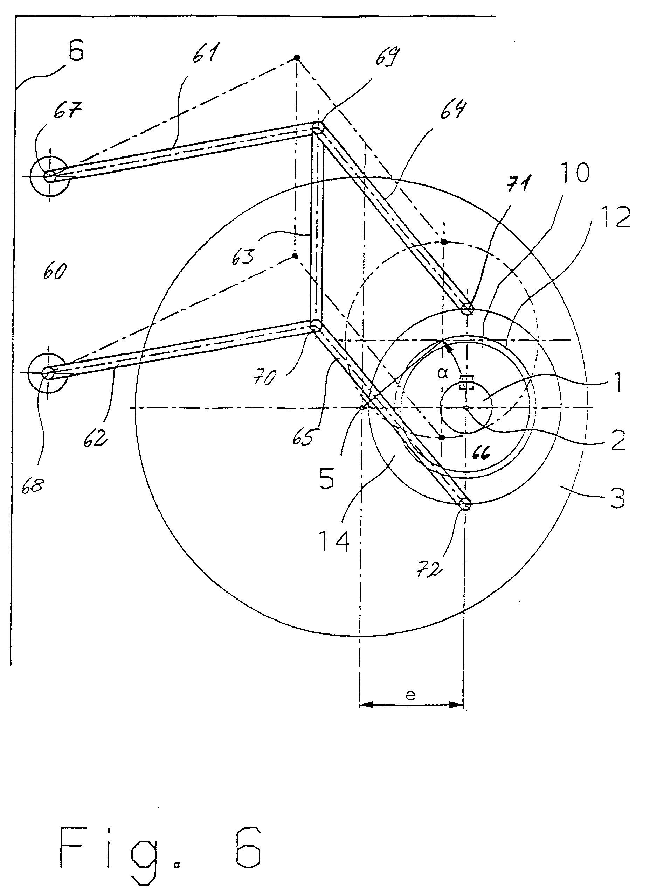

Ein weiteres Ausführungsbeispiel zur Einhaltung der Nullstellung des Referenzmittels ist in den Figuren 4 und 5 dargestellt.

Figur 4 zeigt wieder im Längsschnitt das Zapfenende des Zylinders 1 mit der darauf drehgelagerten Exzenterbuchse 3 und dem verdrehfest darauf befestigten Innenring 10 des Meßmittels. Wie in den beiden vorbeschriebenen Ausführungsbeispielen ist der Außenring 14 des Referenzmittels auf dem Innenring 10 des Meßmittels gleitdrehgelagert. Der Außenring 14 wird in diesem Ausführungsbeispiel durch eine Geradführung am Verdrehen gehindert. Die Geradführung erlaubt eine rein translatorische, der Schwenkbewegung des Zylinders 1 folgende Bewegung des Außenrings 14.

Die Geradführung ist im Ausführungsbeispiel als Kreuzschlitten ausgebildet. Ein erstes Führungsteil 52 des Kreuzschlittens ist mittels eines Bolzens bzw. einer Schraube 53 am Gestell 6 starr befestigt. In einer senkrecht zur Blattebene von Figur 4 verlaufenden Nut des ersten Führungsteils 52 ist ein zweites Führungsteil 51 gleitgeführt. Durch eine in diesem zweiten Führungsteil 51 ausgebildete weitere Nut wird ein drittes Führungsteil 50 des Kreuzschlittens ebenfalls zwangsweise geradgeführt, und zwar in einer Richtung senkrecht zur Geradführung des zweiten Führungsteils 51 und senkrecht zur Drehachse 2 des Zylinders 1. Der Außenring 14 ist mit dem dritten Führungsteil 50 starr verbunden.

In Figur 5 ist die Ansicht A nach Figur 4 zu sehen. Unter den Bezugszeichen 50 und 51 für das dritte und das zweite Führungsteil sind die Bewegungsrichtungen dieser beiden Schlittenteile 50 und 51 eingetragen. Der auf den dritten Führungsteil bzw. Schlittenteil 50 sitzende Außenring 14 ist somit in der Ebene der Ansicht A translatorisch frei bewegbar, während ein Verdrehen des Außenrings 14 um die Drehachse 2 des Zylinders 1 verhindert wird.

Figur 6 zeigt ein weiteres Beispiel für eine Zwangsführung zum Verhindern einer Eigendrehung des Referenzmittels. Die Zwangführung wird nach diesem Ausführungsbeispiel durch ein mehrgliedriges Drehgelenkgetriebe gebildet. Das Getriebe weist die Form zweier Parallelogramme auf, die einen Schenkel gemeinsam haben. Ein erster Schenkel 60 wird zwischen einem gestellfesten Drehgelenk 67 und einem gestellfesten Drehgelenk 68 durch das Gestell 6 gebildet. In den beiden Drehgelenken 67 und 68 ist je ein Schenkel 61 bzw. 62 am Gestell 6 drehgelagert. An ihren den Drehgelenken 67 bzw. 68 abgewandten Enden sind die beiden Schenkel 61 und 62 des Getriebes drehbar mit weiteren Schenkeln 64 und 65 verbunden. Die entsprechenden Drehgelenke sind mit den Bezugsziffern 69 und 70 versehen. Diese beiden Drehgelenke 69 und 70 werden durch einen Schenkel 63 bei einem konstanten Abstand von einander gehalten. Die von diesen beiden Drehgelenken 69 und 70 jeweils abgewandten Enden der beiden Schenkel 64 und 65 sind mit dem Außenring 14 des Referenzmittels drehbar bei 71 und 72 verbunden. Zwischen diesen beiden letztgenannten Drehgelenken 71 und 72 ist der letzte Schenkel 66 des dargestellten Drehgelenkgetriebes ausgebildet.

Sämtliche Schenkel 60 bis 66 sind in sich starr. Im Ausführungsbeispiel werden die Schenkel 61-65 der beiden Parallelogramme durch einfache Stäbe gebildet. Die Drehachsen der sechs Drehgelenke 67 bis 72 verlaufen parallel zur Drehachse 2 des Zylinders 1. Das Drehgelenkgetriebe nach Figur 6 in der Form eines doppelten Parallelogramms mit dem gemeinsamen Schenkel 63 führt den Außenring 14, der zwischen den Drehgelenken 71 und 72 selbst den Parallelogrammschenkel 66 bildet, verdrehfrei rein translatorisch einer Schwenkbewegung des Zylinders 1 um die Schwenkachse 5 folgend in der Blattebene von Figur 6. Der erste gestellseitige Schenkel 60, der gemeinsame Schenkel 63 und der am Außenring 14 gebildete Schenkel 66 sind gleichlang und in allen Phasen einer Schwenkbewegung des Zylinders 1 parallel zueinander, entsprechend der Ausbildung des Getriebes als Doppelparallelogramm. Durch die Festlegung des ersten Schenkel 60 am Gestell 6 wird somit ein Verdrehen des Außenrings 14 beim Schwenken des Zylinders 1 verhindert.

**Patentansprüche**

1. Drehgeber an einem Zylinder einer Druckmaschine, mit

   a) einem an dem Zylinder (1) verdrehsicher gegenüber einer Drehachse (2) des Zylinders (1) angeordneten Messmittel (10, 13) und
   b) einem auf dem Zylinder (1) um die Drehachse (2) des Zylinders (1) drehbar gelagerten Referenzmittel (14, 15), wobei
   c) die Stellung des Messmittels (10, 13) relativ zum Referenzmittel (14, 15) erfasst und daraus die Winkellage des Zylinders (1) gegenüber dem Gestell (6) der Druckmaschine bestimmt wird,
   **dadurch gekennzeichnet, dass**
   d) das Referenzmittel (14, 15) bei einer Schwenkbewegung des Zylinders (1) durch ein Haltemittel (20; 30; 40) in einer gegenüber dem Gestell (6) der Druckmaschine wenigstens im wesentlichen unveränderten Winkellage gehalten wird.

2. Drehgeber nach Anspruch 1, dadurch gekennzeichnet, daß das Meßmittel (10, 13) einen Innenring (10) aufweist, der verdrehsicher auf einem Zapfenende des Zylinders (1) befestigt ist, und das Referenzmittel (14, 15) einen Außenring (14) aufweist, der auf einer äußeren Umfangsfläche des Innenrings (10) drehgelagert ist.

3. Drehgeber nach Anspruch 1 oder 2, dadurch gekennzeichnet, daß das Haltemittel durch einen am Referenzmittel (14, 15) befestigten Pendelarm (20) gebildet wird.

4. Drehgeber nach Anspruch 1 oder 2, dadurch gekennzeichnet, daß das Referenzmittel (14, 15) wenigstens nahezu verdrehfrei zwangsgeführt wird.

5. Drehgeber nach dem vorhergehenden Anspruch, dadurch gekennzeichnet, daß das Haltemittel durch einen am Gestell (6) schwenkbar gelagerten Haltearm (30) gebildet wird, mit dem das Referenzmittel (14, 15) zur Zwangsführung in Eingriff steht.

6. Drehgeber nach dem vorhergehenden Anspruch, dadurch gekennzeichnet, daß der Haltearm (30) mit einer Ausnehmung (32) versehen ist, in die das Referenzmittel (14, 15) eingreift und in der es rein translatorisch geführt wird.

7. Drehgeber nach Anspruch 4, dadurch gekennzeichnet, daß das Referenzmittel (14, 15) durch eine mit dem Gestell (6) verbundene Geradführung verdrehfrei geführt wird, die eine translatorische Bewegung des Referenzmittels (14, 15) bei einer Winkellagenänderung des Zylinders (1) zuläßt.

8. Drehgeber nach dem vorgehenden Anspruch, dadurch gekennzeichnet, daß die Geradführung durch einen Kreuzschlitten (50, 51, 52) gebildet wird, der ein am Gestell (6) befestigtes erstes Führungsteil (52), ein darin geradgeführtes zweites Führungsteil (51) und ein im zweiten Führungsteil (51) geradgeführtes drittes Führungsteil (50) aufweist, an dem der Außenring (14) befestigt ist.

9. Drehgeber nach Anspruch 4, dadurch gekennzeichnet, daß das Referenzmittel (14, 15) durch ein Mehrgelenkgetriebe, insbesondere ein mehrgliedriges Drehgelenkgetriebe, bei einer Winkellagenänderung des Zylinders (1) verdrehfrei geführt wird.

10. Drehgeber nach dem vorhergehenden Anspruch, dadurch gekennzeichnet, daß das Mehrgelenkgetriebe die Form zweier an einem gemeinsamen Schenkel (63) aneinander stoßender Parallelogramme hat, wobei die Schenkel (60-66) der beiden Parallelogramme starr ausgebildet und jeweils drehbar miteinander verbunden sind.

11. Drehgeber nach dem vorhergehenden Anspruch, dadurch gekennzeichnet, daß ein erster Schenkel (60) am Gestell (6) und ein anderer Schenkel (66) am Außenring (14) festgelegt ist, wobei dieser andere Schenkel (66) bei einer Winkellagenänderung des Zylinders (1) parallel zum ersten Schenkel (60) gehalten wird.

12. Verfahren zum Synchronisieren der Drehbewegung eines schwenkbaren Zylinders einer Druckmaschine beim Zuschwenken dieses Zylinders auf einen Gegenzylinder zu,
**dadurch gekennzeichnet, dass**
ein Drehgeber nach einem der vorhergehenden Ansprüche 1 bis 11 verwendet wird.

**Claims**

1. A rotary encoder on a cylinder of a printing machine, with

   (a) a measuring means (10, 13) so disposed on the cylinder (1) that the said means does not rotate about an axis of rotation (2) of the cylinder (1), and
   (b) a reference means (14, 15) so mounted on the cylinder (1) that the said means is rotatable about the axis of rotation (2) of the cylinder (1),
   (c) the position of the measuring means (10, 13) relative to the reference means (14, 15) being detected, and the angular position of the cylinder (1) relative to the frame (6) of the printing machine being determined therefrom,
   **characterised in that**
   (d) when the cylinder (1) makes a tilting movement, the reference means (14, 15) is held by a holding means (20; 30; 40) in an at least substantially unchanged angular position relative to the frame (6) of the printing machine.

2. A rotary encoder according to Claim 1, characterised in that the measuring means (10, 13) has an inner ring (10) which is secured in an anti-rotational manner to one journal extremity of the cylinder (1), and in that the reference means (14, 15) has an outer ring (14) which is rotatably mounted on an outer circumferential face of the inner ring (10).

3. A rotary encoder according to Claim 1 or Claim 2, characterised in that the holding means is formed by a swing arm (20) secured to the reference means (14, 15).

4. A rotary encoder according to Claim 1 or Claim 2, characterised in that the reference means (14, 15) is guided in a restrained and at least virtually non-rotational manner.

5. A rotary encoder according to the preceding claim, characterised in that the holding means is formed by a holding arm (30), which is tiltably mounted on the frame (6) and with which the reference means (14, 15) is engaged for restraint purposes.

6. A rotary encoder according to the preceding claim, characterised in that the holding arm (30) is provided with a recess (32) in which the reference means (14, 15) engages and in which it is guided in a purely translational manner.

7. A rotary encoder according to Claim 4, characterised in that the reference means (14, 15) is guided in a non-rotational manner by a linear guide which is connected to the frame (6) and which permits a translational movement of the reference means (14, 15) when there is a change in the angular position of the cylinder (1).

8. A rotary encoder according to the preceding claim, characterised in that the linear guide is formed by a cross slide (50, 51, 52) having a first guide portion (52) secured to the frame (6), a second guide portion (51) guided in a straight line in the first guide portion, and a third guide portion (50), which is guided in a straight line in the second guide portion (51) and to which is secured the outer ring (14).

9. A rotary encoder according to Claim 4, characterised in that the reference means (14, 15) is guided in a non-rotational manner by a multiple linkage, in particular a multi-member rotary linkage, when there is a change in the angular position of the cylinder (1).

10. A rotary encoder according to the preceding claim, characterised in that the multiple linkage has the form of two parallelograms mutually adjoining at a common side (63), the sides (60-66) of the two parallelograms being of a rigid design and each being mutually connected in a rotatable manner.

11. A rotary encoder according to the preceding claim, characterised in that a first side (60) is defined at the frame (6) and another side (66) is defined at the outer ring (14), this other side (66) being held parallel to the first side (60) when there is a change in the angular position of the cylinder (1).

12. Method of synchronising the rotary movement of a tiltable cylinder of a printing machine when this cylinder is tilted towards an opposite cylinder, **characterised in that** a rotary encoder according to any one of the preceding Claims 1 to 11 is used.

**Revendications**

1. Capteur de rotation monté sur un cylindre d'une machine à imprimer, comprenant

   a) un moyen mesureur (10, 13) disposé sur le cylindre (1), avec verrouillage rotatif vis-à-vis d'un axe de rotation (2) dudit cylindre (1), et
   b) un moyen de référence (14, 15) monté sur le cylindre (1), de manière rotative autour de l'axe de rotation (2) dudit cylindre (1), sachant que
   c) la position du moyen mesureur (10, 13) par rapport au moyen de référence (14, 15) est détectée et, sur cette base, la position angulaire du cylindre (1) vis-à-vis du bâti (6) de la machine à imprimer est déterminée, caractérisé par le fait que
   d) le moyen de référence (14, 15) est retenu par un moyen d'arrêt (20 ; 30 ; 40), lors d'un mouvement pivotant du cylindre (1), dans une position angulaire au moins pour l'essentiel inchangée par rapport au bâti (6) de la machine à imprimer.

2. Capteur de rotation selon la revendication 1, caractérisé par le fait que le moyen mesureur (10, 13) présente une bague intérieure (10) fixée, avec verrouillage rotatif, sur une extrémité d'un tourillon du cylindre (1), et le moyen de référence (14, 15) comporte une bague extérieure (14) montée à rotation sur une surface périphérique extérieure de ladite bague intérieure (10).

3. Capteur de rotation selon la revendication 1 ou 2, caractérisé par le fait que le moyen d'arrêt est formé par un bras pendulaire (20) fixé au moyen de référence (14, 15).

4. Capteur de rotation selon la revendication 1 ou 2, caractérisé par le fait que le moyen de référence (14, 15) est guidé à force, au moins approximativement sans aucune rotation.

5. Capteur de rotation selon la revendication précédente, caractérisé par le fait que le moyen d'arrêt est formé par un bras d'arrêt (30) qui est monté à pivotement sur le bâti (6), et avec lequel le moyen de référence (14, 15) vient en prise en vue du guidage forcé.

6. Capteur de rotation selon la revendication précédente, caractérisé par le fait que le bras d'arrêt (30) est pourvu d'un évidement (32) dans lequel le moyen de référence (14, 15) pénètre, et dans lequel il est guidé en un mouvement purement translatoire.

7. Capteur de rotation selon la revendication 4, caractérisé par le fait que le moyen de référence (14, 15) est guidé, sans aucune rotation, par un système de guidage rectiligne relié au bâti (6) et autorisant un mouvement translatoire dudit moyen de référence (14, 15) lors d'une variation de la position angulaire du cylindre (1).

8. Capteur de rotation selon la revendication précédente, caractérisé par le fait que le système de guidage rectiligne est formé par un chariot en croix (50, 51, 52) comprenant une première partie de guidage (52) fixée au bâti (6), une deuxième partie de guidage (51) guidée rectilignement dans la partie précitée, et une troisième partie de guidage (50) guidée rectilignement dans ladite deuxième partie de guidage (51), et à laquelle la bague extérieure (14) est fixée.

9. Capteur de rotation selon la revendication 4, caractérisé par le fait que le moyen de référence (14, 15) est guidé sans aucune rotation, lors d'une variation de la position angulaire du cylindre (1), par une transmission à articulations multiples notamment constituée d'une transmission à articulations tournantes, comprenant plusieurs organes.

10. Capteur de rotation selon la revendication précédente, caractérisé par le fait que la transmission à articulations multiples revêt la forme de deux parallélogrammes se rencontrant mutuellement sur une branche commune (63), les branches (60-66) des deux parallélogrammes étant de réalisation rigide et étant respectivement reliées les unes aux autres, avec faculté de rotation.

11. Capteur de rotation selon la revendication précédente, caractérisé par le fait qu'une première branche (60) est fixée au bâti (6) et une autre branche (66) est fixée à la bague extérieure (14), cette autre branche (66) étant maintenue parallèle à la première branche (60) lors d'une variation de la position angulaire du cylindre (1).

12. Procédé de synchronisation du mouvement rotatoire d'un cylindre pouvant pivoter d'une machine à imprimer, lorsque ce cylindre est animé d'un pivotement en direction d'un contre-cylindre, caractérisé par le fait qu'on utilise un capteur de rotation conforme à l'une des revendications précédentes 1 à 11.

Fig. 1

16 14 13 15

6

3

1

32

4

5

2

$e$

17

10

11

12

30

31

6

Fig. 2

Fig. 3

53

6

52

51

50

13

3

14

15

1

10

4

11

5

2

A

e

12

Fig. 4

Ansicht A

Fig. 5

Fig. 6